# EUROPÄISCHE PATENTANMELDUNG

(11) **EP 1 764 207 A2**
(43) Veröffentlichungstag der Anmeldung: **21.03.2007**
(21) Anmeldenummer: 06016686.5
(22) Anmeldetag: 10.08.2006
(51) Int. Cl.: B29C 63/02, B27N 7/00, B44C 1/10, B44C 5/04, A47B 96/00

(54) **Verfahren und Vorrichtung zur Beschichtung von Möbelfronten**

(30) Priorität: 16.09.2005 DE 102005044469
(71) Anmelder: Robert Bürkle GmbH, 72250 Freudenstadt (DE)
(72) Erfinder: Huber, Reinhard, Dipl.-Ing. (FH), 72250 Freudenstadt-Dietersweiler (DE)
(74) Vertreter: Brommer, Hans Joachim

(57) **Zusammenfassung**

Die Erfindung betrifft ein Verfahren und eine Vorrichtung zur dreidimensionalen Beschichtung von Möbelfronten, wobei von rückseitig beschichteten Platten ausgegangen wird. Sind die Möbelfronten an ihrer Vorderseite und an ihrem umlaufenden Randseiten mit Dekorfolie beschichtet, so werden sie nach dem Entfernen der überstehenden Ränder der Dekorfolie an ihrer bereits beschichteten Rückseite neu mit Druckfarbe überdruckt.

## Beschreibung

Die Erfindung betrifft ein Verfahren und eine Vorrichtung zur dreidimensionalen Beschichtung von Möbelfronten aus Holzwerkstoffen und dergleichen, wobei von rückseitig beschichteten großen Platten ausgegangen wird, aus denen die Möbelfronten in der gewünschten Größe herausgetrennt, an ihrer Vorderseite beleimt und in einem an die Maße der Beschichtungspresse passenden Legemuster nebeneinander gelegt werden, worauf sie in der Beschichtungspresse unter Wärme- und Druckeinwirkung an ihrer Vorderseite und gleichzeitig auch an den dazu abgewinkelten umlaufenden Randseiten mit einer durchgehenden flexiblen Dekorfolie beschichtet werden und die Möbelfronten danach aus der Dekorfolie herausgetrennt, vereinzelt und an ihrer Rückseite von überstehenden Folienrändern befreit werden. Dabei können einzelne der vorgenannten Verfahrensschritte kombiniert werden oder es kommen zusätzliche Verfahrensschritte hinzu, etwa eine Reinigung der Möbelfronten vor dem Leimauftrag oder ein Trocknungsvorgang nach dem Leimauftrag.

Das vorgenannte Verfahren und die Vorrichtungen hierfür sind in diversen Ausgestaltungen bekannt. Die Anmelderin hat dabei folgende Problematik erkannt: Grundsätzlich wird bei der dreidimensionalen Beschichtung von Möbelfronten von großen Platten ausgegangen, die bereits rückseitig beschichtet sind. Damit diese Beschichtung zu der später aufgebrachten Dekorfolie passt, werden die Platten in einer Vielzahl von Farben und Mustern der rückseitigen Beschichtung zur Verfügung gestellt und der Hersteller der Möbelfronten ist mehr oder weniger gezwungen, ein großes Lager mit unterschiedlich beschichteten Platten vorzuhalten. Dies erfordert nicht nur einen hohen Platzbedarf, sondern auch eine hohe Kapitalbindung und eine aufwendige Logistik, um die unterschiedlichen Platten-Rückseiten sortiert zu bevorraten und zu verarbeiten.

Nicht zuletzt verschärft sich dadurch die Reststückproblematik, weil nur Reststücke der gleichen Beschichtung kombiniert werden können.

Ausgehend von dieser Erkenntnis liegt der vorliegenden Erfindung die Aufgabe zugrunde, ein Verfahren und eine Vorrichtung anzugeben, um die Farb- bzw. Musteranpassung von Werkstückvorderseite und Werkstückrückseite zu optimieren, so dass unterschiedlichste Dekore hergestellt werden können, ohne die oben genannten Nachteile in Kauf nehmen zu müssen. Insbesondere soll sich die Erfindung durch einen einfacheren und kostengünstigen Verfahrensablauf auszeichnen.

Diese Aufgabe wird hinsichtlich der Verfahrensschritte dadurch gelöst, dass die Möbelfronten nach dem Entfernen der überstehenden Folienränder an ihrer bereits beschichteten Rückseite neu mit Druckfarbe überdruckt werden in einer zur Dekorfolie passenden Farbe und/oder Musterung.

Dadurch ergibt sich der Vorteil, dass der Möbelfronten-Hersteller nicht mehr auf Platten mit bestimmter Beschichtungsfarbe zurückgreifen muss, sondern völlige Freiheit hat, beliebig beschichtete Platten, insbesondere gleiche Platten für unterschiedlichste Dekorfolien zu verwenden, wodurch sich seine Lagerhaltung und die Kapitalbindung enorm reduzieren. Des weiteren ergibt sich der Vorteil, dass das nachträgliche Überdrucken der beschichteten Rückseite eine optimale Anpassung an unterschiedlichste Dekorfolien gestattet.

Zwar ist das Bedrucken einer Basisfolie an sich bereits bekannt, nicht jedoch bei Möbelteilen, die bereits allseitig, insbesondere auch an ihrer Rückseite, beschichtet sind.

Untersuchungen der Anmelderin als Ausgangsprodukt unbeschichtete Platten einzusetzen, wodurch sich gleichermaßen die Lagerhaltung und Kapitalbindung vereinfacht hätten, haben gezeigt, dass solche unbeschichteten Platten zum Verziehen neigen. Es ist deshalb günstiger, mit beschichteten Platten zu arbeiten, auch wenn diese Beschichtung nach dem Überdrucken mit Druckfarbe nicht mehr oder kaum noch sichtbar ist.

Das nachträgliche Überdrucken der beschichteten Rückseiten erfolgt zweckmäßig durch Walzen, Siebdruck oder durch Tintenstrahldruck, insbesondere Digitaldruck.

Damit die Druckfarbe gut haftet, wird in Weiterbildung der Erfindung vorgeschlagen, die Möbelfronten vor dem Überdrucken zumindest an ihrer Rückseite einer Reinigung zu unterziehen, insbesondere durch Bürsten, vorzugsweise auch unter Zugabe von Reinigungsflüssigkeiten und Primern.

Eine andere zweckmäßige Weiterbildung der Erfindung besteht darin, die Möbelfronten nach dem Überdrucken und gegebenenfalls nach einer Trocknungsphase zumindest an ihrer Rückseite mit einem Schutzlack zu versehen, insbesondere einer transparenten Schutzschicht. Dadurch wird nicht nur der Druckauftrag geschützt sondern die Rückseite erhält ein insgesamt gefälligeres Aussehen.

Grundsätzlich kann das Überdrucken der Möbelfronten-Rückseiten von unten oder von oben erfolgen. Meist werden die Möbelfronten vor dem Besäumen ohnehin umgedreht, so dass ihre Rückseite nach oben zu liegen kommt. Dann kann sowohl das Überdrucken wie auch das nachträgliche Aufbringen der Schutzschicht in vorteilhafter Weise von oben erfolgen.

Hinsichtlich der Vorrichtungsmerkmale wird die eingangs formulierte Aufgabe der vorliegenden Erfindung dadurch gelöst, dass der Station, wo die überstehenden Folienränder von den Möbelfronten entfernt werden, eine Druckstation nachgeschaltet ist. Dabei kann es sich um Walzenauftragsmaschinen handeln, ebenso aber auch um Tintenstrahldrucker, insbesondere wenn spezielle Muster aufgebracht werden sollen.

Um eine gute Haftung der Druckfarbe auf der beschichteten Rückseite der Möbelfronten und eine rasche Aushärtung zu gewährleisten, kann der Druckstation eine Reinigungsvorrichtung, insbesondere mit Rotationsbürsten sowie der Auftrag von Primern, vorgeschaltet und eine Trocknungsstation nachgeschaltet sein. Anschließend folgt zweckmäßig eine weitere Lackierstation für einen Schutzlack und gegebenenfalls eine nochmalige Trocknungsstation.

Weitere Merkmale und Vorteile der Erfindung ergeben sich aus der Beschreibung eines Ausführungsbeispieles und aus der Zeichnung; dabei zeigt
- Figur 1: ein Fließschema des Herstellungsverfahrens;
- Figur 2: ein schematischer Vertikalschnitt einer Walzendruckmaschine;
- Figur 3: ein schematischer Vertikalschnitt einer Walzendruckmaschine für Klarlack.

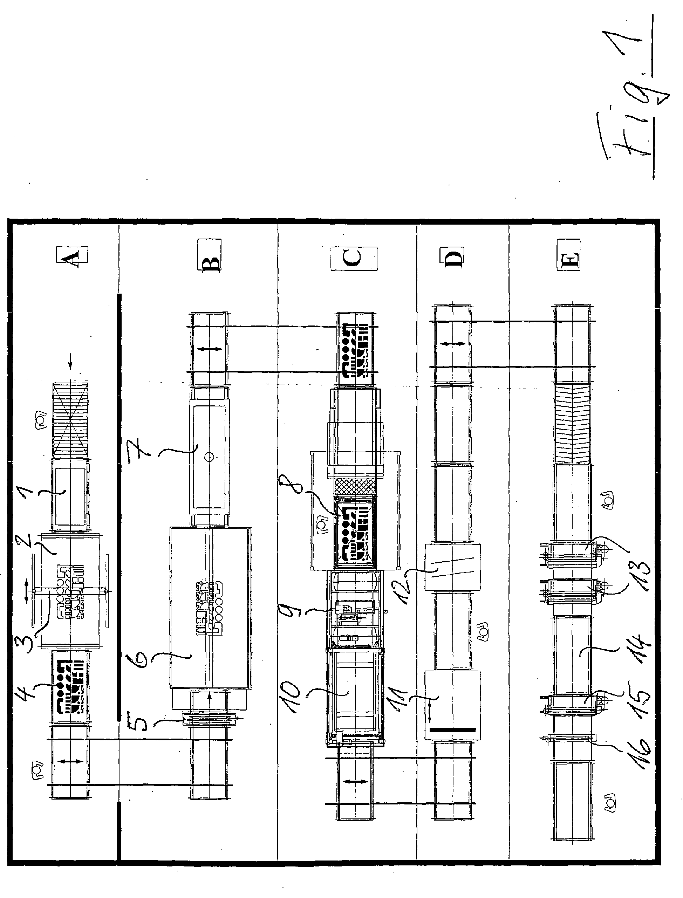

In Figur 1 erkennt man das Ausgangsprodukt in Form einer großen Platte 1, die an ihrer Unterseite die übliche Beschichtung, im Allgemeinen aus einer Melaminfolie, aufweist. Diese Platte wird einer Frässtation 2 zugeführt, wo ein horizontal verfahrbarer Fräskopf die einzelnen Möbelfronten in der gewünschten Größe und Kontur aus der Platte 1 herausfräst. Die Möbelfronten sind hier in ihrer Gesamtheit mit dem Bezugszeichen 4 markiert. Sie gelangen über eine Entstaubungsstation 5 in eine Beleimungsanlage 6, wo sie an ihrer Oberseite mit Klebstoff beschichtet werden. Nach einer anschließenden Trocknungsstation 7 kommen sie auf einen Legetisch 8, wo sie in einem an die Größe der Beschichtungspresse passenden Legemuster arrangiert werden. Selbstverständlich liegt es im Rahmen der Erfindung, dieses Legemuster schon früher zu erzeugen, etwa bereits beim Ausfräsen in der Frässtation 2.

Anschließend gelangen die Möbelfronten 4 in eine Beschichtungspresse 9, wo sie in bekannter Weise an der Oberseite und den davon nach unten laufenden Randseiten, gegebenenfalls auch in Profilierungen der Oberseite, mit einer Kunststofffolie beschichtet werden. Nach der Beschichtung werden die Möbelfronten in einen Drehwender 10 transportiert und dort um 180 Grad umgedreht, so dass die Dekorfolie unten liegt. In diesem Drehwender 10, bevorzugt aber in einer nachgeschalteten Schneidstation 11 werden die Möbelfronten aus der Dekorfolie herausgeschnitten und die überstehenden Folienränder entfernt.

Wesentlich ist nun, dass die vereinzelten Möbelfronten in einer Reinigungsstation 12 zumindest an ihrer Rückseite gereinigt werden, bevor sie in eine Druckstation 13 gelangen. Dort wird die beschichtete Rückseite der Möbelfronten mit der gewünschten Farbe und/oder Musterung bedruckt.

Anschließend durchlaufen die Möbelfronten eine Durchlauf-Trockenkammer 14, wo die Druckfarbe etwa durch UV- oder Infrarot-Bestrahlung oder Umluftumwälzung aushärtet.

Schließlich gelangen die Möbelfronten noch in eine Lackierstation 15, wo die überdruckten Rückseiten mit Klarlack beschichtet werden. Hieran kann sich ebenfalls nochmals eine Trocknungsstation 16 anschließen. Der Klarlack ist zweckmäßig ein wasserlöslicher, UV-härtender, kratzfester Lack, insbesondere auf Acrylat-Basis.

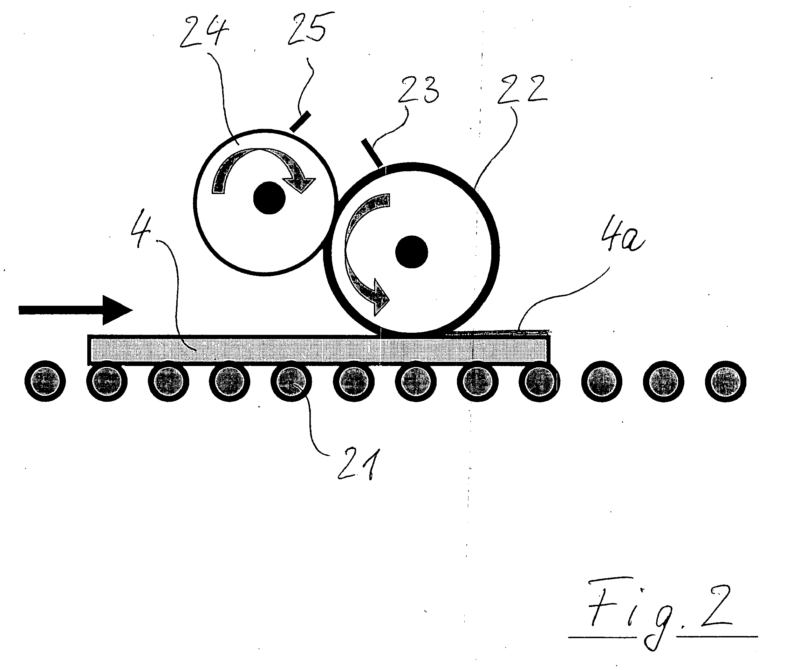

Figur 2 zeigt die konstruktive Ausgestaltung einer Druckstation 13 für das Aufbringen von Druckfarbe. Man sieht eine Möbelfront 4, die auf einer Transporteinrichtung, insbesondere einer Rollenbahn 21 durch die Druckstation hindurch befördert wird. Dabei liegt die Möbelfront 4 mit ihrer melaminbeschichteten Rückseite 4a nach oben, während die Unterseite und die umlaufenden Ränder bereits mit Dekorfolie beschichtet sind.

Figur 2 zeigt den Zustand, wo die Rückseite 4a bereits eine Vorbehandlung, insbesondere Reinigung und Aufbringung von Primer, erfahren hat. Die Möbelfront wird durch einen Spalt zwischen einer gummierten Druckwalze 22 und der Rollenbahn 21 hindurch befördert, wobei die Druckwalze 22 auf der beschichteten Rückseite 4a der Möbelfront 4 abrollt und dabei die gewünschte Druckfarbe auf die Melamin-Rückseite überträgt. Die Zufuhr der Druckfarbe erfolgt entweder direkt im oberen Bereich der Druckwalze 22, nahe einer Rakel 23 oder über einen an der Druckwalze abrollenden Druckzylinder 24 an dessen Rakel 25. Dabei kann der Druckzylinder 24 eine Gravur aufweisen, wenn die Rückseite der Möbelfront nicht einheitlich ganzflächig, sondern mit einem bestimmten Muster bedruckt werden soll.

Alternativ zu der eben beschriebenen Walzenauftragsmaschine kann die Druckfarbe selbstverständlich auch auf andere Weise aufgebracht werden, insbesondere durch digital gesteuerte Tintenstrahldrucker.

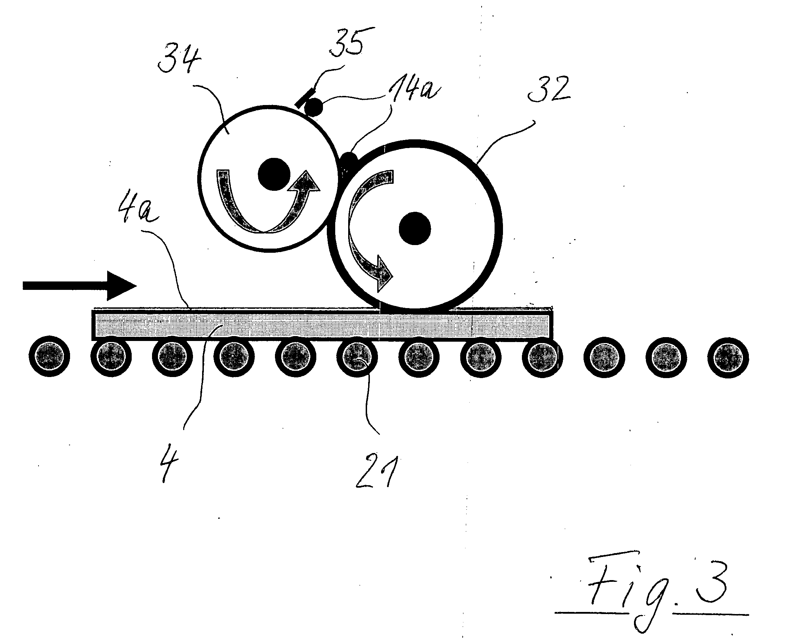

Figur 3 zeigt das Prinzip einer Walzenlackiermaschine für die Lackierstation 15. Dabei wird ebenfalls mit einer gummierten Auftragwalze 32 wie bei der Walze 22 in Figur 2 gearbeitet, wobei die Walze auf der Werkstückrückseite abrollt. Im Gegensatz zu Figur 2 läuft jedoch die andere, nach oben abgesetzte Walze 34 in der gleichen Drehrichtung um wie die Druckwalze 32, d.h., dass die Walzen 32 und 34 dort, wo sie aufeinandertreffen, gegeneinanderlaufen. Daher bildet sich hier ein Lackvorrat 14a nicht nur im Zwickelraum oberhalb der beiden Walzen 32 und 34, sondern auch an der Rakel 35. Diese Walzenkinematik ist besonders geeignet, um die bedruckte Rückseite 4a noch mit Schutzlack zu beschichten.

Nach dem Passieren der in Figur 3 gezeigten Lackierstation gelangen die Möbelfronten in die Trocknungskammer 16, wie in Figur 1 gezeigt.

Der vorstehend verwendete Begriff "Möbelfronten" umfasst beliebige Möbelteile, also nicht nur Wände, Türen; Fachböden und dergleichen, sondern beispielsweise auch geschwungene und gewölbte Möbelteile, Ornamente und dergleichen.

## Patentansprüche

1. Verfahren zur dreidimensionalen Beschichtung von Möbelfronten (4) aus Holzwerkstoffen und dergleichen, wobei von rückseitig beschichteten großen Platten (1) ausgegangen wird, aus denen die Möbelfronten (4) in der gewünschten Größe herausgetrennt, an ihrer Vorderseite beleimt und in einem an die Maße der Beschichtungspresse passenden Legemuster nebeneinander gelegt werden, worauf die Möbelfronten (4) in der Beschichtungspresse (9) unter Wärme- und Druckeinwirkung an ihrer Vorderseite und gleichzeitig auch an den dazu abgewinkelten umlaufenden Randseiten mit einer durchgehenden flexiblen Dekorfolie beschichtet werden und die Möbelfronten danach aus der Dekorfolie herausgetrennt und an ihrer Rückseite von überstehenden Folienrändern befreit werden,
**dadurch gekennzeichnet,**
**dass** die Möbelfronten (4) nach dem Entfernen der überstehenden Folienränder an ihrer bereits beschichteten Rückseite (4a) mit Druckfarbe überdruckt werden in einer zur Dekorfolie der Vorderseite passenden Farbe und/oder Musterung.

2. Verfahren nach Anspruch 1,
**dadurch gekennzeichnet,**
**dass** das Überdrucken durch Walzen (22), Siebdruck oder durch Tintenstrahldrucker erfolgt.

3. Verfahren nach Anspruch 1,
**dadurch gekennzeichnet,**
**dass** die Möbelfronten (4) zumindest an der Rückseite (4a) vor dem Überdrucken gereinigt werden.

4. Verfahren nach Anspruch 1,
**dadurch gekennzeichnet,**
**dass** vor dem Überdrucken ein Haftvermittler auf die Rückseite (4a) der Möbelfronten (4) aufgebracht wird.

5. Verfahren nach Anspruch 1,
**dadurch gekennzeichnet,**
**dass** die Möbelfronten (4) nach dem Überdrucken und gegebenenfalls nach einer Lacktrocknungsphase zumindest an ihrer Rückseite (4a) mit einer Schutzschicht versehen werden.

6. Verfahren nach Anspruch 5,
**dadurch gekennzeichnet,**
**dass** die Schutzschicht transparent ist.

7. Verfahren nach Anspruch 1,
**dadurch gekennzeichnet,**
**dass** die Möbelfronten (4) vor dem Überdrucken um 180 Grad gewendet werden, so dass ihre Rückseite (4a) oben liegt.

8. Vorrichtung zur Durchführung des Verfahrens nach Anspruch 1,
**dadurch gekennzeichnet,**
**dass** einer Schneidstation (11), wo überstehende Folienränder entfernt werden, eine Druckstation (13) nachgeschaltet ist.

9. Vorrichtung nach Anspruch 8,
**dadurch gekennzeichnet,**
**dass** der Druckstation (13) eine Reinigungsvorrichtung (12), insbesondere mit rotierenden Bürsten und die Zugabe eines Haftvermittlers für die Rückseiten der Möbelfronten (4) vorgeschaltet ist.

10. Vorrichtung nach Anspruch 8,
**dadurch gekennzeichnet,**
**dass** der Druckstation (13) für das Überdrucken der beschichteten Rückseiten eine Trocknungsstation (14) nachgeschaltet ist.

11. Vorrichtung nach Anspruch 10,
**dadurch gekennzeichnet,**
**dass** der Trocknungsstation (14) eine Lackierstation (15) für einen Schutzlack nachgeschaltet ist.
